# EUROPÄISCHE PATENTANMELDUNG

(11) **EP 0 754 993 A1**
(43) Veröffentlichungstag der Anmeldung: **22.01.1997**
(21) Anmeldenummer: 96104039.1
(22) Anmeldetag: 14.03.1996
(51) Int. Cl.: G06F 1/16

(54) **Erweiterungseinheit für tragbare Computer**

(30) Priorität: 28.04.1995 DE 19516620
(71) Anmelder: VOBIS MICROCOMPUTER AG, D-52146 Würselen (DE)
(72) Erfinder: Lieven Theo,, 52146 Wurselen (DE)
(74) Vertreter: Bauer, Wulf, Dr.

(57) **Zusammenfassung**

Die Erfindung zeigt eine Erweiterungseinheit (**53**) für tragbare Computer (**51**), mit einem Trägergehäuse, das Mittel für die Kontaktierung und Lagerung des tragbaren Computers hat und mit einer Elektronikplatine, die Anschlüsse für periphere Funktionseinheiten außerhalb des tragbaren Computers zu dessen Funktionserweiterung aufweist. Die Lagerung und Kontaktierung des tragbaren Computers in der Erweiterungseinheit sind vertikal gekippt, d.h. es erfolgt mit der schmalen Rückseite des tragbaren Computers senkrecht zur Horizontalen.

## Beschreibung

Die Erfindung betrifft eine Erweiterungseinheit für tragbare Computer, mit einem Trägergehäuse, das Mittel für die Kontaktierung und Lagerung des tragbaren Computers hat und mit einer Elektronikplatine, die Anschlüsse für periphere Funktionseinheiten wie z.B. Drucker, Maus, Monitor, Tastatur oder zusätzliche Laufwerke außerhalb des tragbaren Computers, zu dessen Funktionserweiterung aufweist. Derartige Erweiterungseinheiten dienen der Arbeit mit dem tragbaren Computer, sofern der Benutzer eines solchen diesen nicht mit sich führt, sondern ihn an seinem Stammarbeitsplatz in erweitertem Funktionsumfang nutzen will.

Bekannt sind Erweiterungseinheiten für tragbare Computer, derart, daß der tragbare Computer einen als elektrischen Anschluß herausgeführten Rechnerdatenbus (herstellerabhängig oder standardisiert) besitzt und dieser dann durch mechanisches Einschieben des tragbaren Computers in die Erweiterungseinheit mit dieser verbunden wird. Dies geschieht in der Weise, daß der tragbare Computer in die Erweiterungseinheit eingeführt und danach mit dieser kontaktiert wird, was im weiteren die Benutzung der an die Erweiterungseinheit angeschlossenen peripheren Funktionseinheiten bzw. Geräte erlaubt.

Das Einschieben des tragbaren Computers in die Erweiterungseinheit, auch Andocken genannt, geschieht durch horizontales Einschieben des tragbaren Computers in seiner vollen Breite in die Erweiterungseinheit. Konzeptionsbedingt muß demnach die Grundfläche der Erweiterungseinheit in etwa der des tragbaren Computers entsprechen. Ein weiterer konzeptionsbedingter Nachteil besteht darin, daß das Andocken durch das nicht unerhebliche Eigengewicht und die schlechten Griffmöglichkeiten am tragbaren Computer nicht gerade einfach ist. Darüberhinaus ist es bei einer solchen herkömmlichen Lösung unvorteilhaft, daß die Erweiterbarkeit durch derartige Einheiten mit z.B. Laufwerken begrenzt ist, da nur die im Gehäuse vorgesehenen Schächte verwendbar sind.

Der Erfindung liegt daher die Aufgabe zugrunde, eine platzsparende und bezüglich des Andockens und wieder Entfernens des tragbaren Computers leicht zu handhabende Lösung zu finden, die darüberhinaus im Umfang ihrer Erweiterungsfähigkeit durch periphere Funktionseinheiten nicht durch vorgegebene Dimensionen des Erweiterungsgehäuses beschränkt ist.

Diese Aufgabe wird erfindungsgemäß dadurch gelöst, daß sich der tragbare Computer vertikal gekippt in die Erweiterungseinheit für tragbare Computer einführen läßt. Eine solche Erweiterungseinheit für tragbare Computer kann dabei über Zusatzmodule nach Bedarf des Anwenders ausgebaut werden. Dabei ist eine derartige Erweiterungseinheit immer nur so groß, wie der Anwender sie benötigt.

Eine Erweiterungseinheit für tragbare Computer nach der vorliegenden Erfindung, auch Dockingstation genannt, weist ein Trägergehäuse mit Mitteln für die Kontaktierung und Lagerung des tragbaren Computers und eine Elektronikplatine mit Anschlüssen für periphere Funktionseinheiten außerhalb des tragbaren Computers zu dessen Funktionserweiterung auf. Tragbare Computer besitzen zumeist einen als elektrischen Anschluß herausgeführten Rechnerdatenbus. Dieser Rechnerdatenbus, auch Schnittstelle genannt wird nun im Zusammenhang mit der Erweiterungseinheit dazu benutzt, eine elektrische Verbindung zwischen dem tragbaren Computer und der Erweiterungseinheit herzustellen, so daß weitere an die Erweiterungseinheit angeschlossene periphere Einheiten mittels dieser elektrischen Verbindung vom angeschlossenen tragbaren Computer aus benutzt werden können. Derartige periphere Einheiten können z.B. zusätzliche Erweiterungsmodule, Magnetplatten- oder Diskettenlaufwerke, Maus, Drucker, Monitore, Tastaturen etc. sein. Die Elektronik, die dieses leistet ist in der Erweiterungseinheit untergebracht.

Der tragbare Computer kann in die Erweiterungseinheit nach der vorliegenden Erfindung so eingeschoben werden, daß er mit der Rückwand und mindestens einer seiner zwei schmalen Seitenflächen oder Teilen der Rückwand bzw. Seitenflächen, vertikal stehend in Kontakt zu der Erweiterungseinheit tritt.

Die Erweiterungseinheit nach der vorliegenden Erfindung kann um Zusatzmodule zur Aufnahme von 3,5" Einheiten erweitert werden. Diese Zusatzmodule können nun übereinandergestapelt werden, wobei sie mittels Verbindungsvorrichtungen, z. B. Verbindungspunkten nach dem Druckknopfprinzip, aufeinander befestigt werden. Ihre elektrische Verbindung untereinander und zur Erweiterungseinheit hin erfolgt dabei über ein im Modul befindliches Bussystem, wobei jeweils ein Deckel über einer Gehäuseöffnung, durch die ein Anschluß zum Bussystem erfolgt, angebracht ist. Dieser Deckel kann, für den Fall, daß ein weiteres Zusatzmodul oberhalb einer Erweiterungseinheit angebracht werden soll, entfernt werden, so daß der Verbindungsweg zum Bussystem freigegeben ist. Darüberhinaus weist die Erweiterungseinheit nach der vorliegenden Erfindung ein Modul der Größe 5 1/4" zur Aufnahme z.B. eines CD-Laufwerks oder ähnlichem auf. In einer Ausführungsform der vorliegenden Erfindung können die 3,5" Module auch fest in die Erweiterungseinheit und, in diesem Falle in ihrer Standardausführung, zunächst in leerem Zustand eingebaut sein. Der modulartige Aufbau der Erweiterungseinheit nach der vorliegenden Erfindung ist unabhängig von der vertikalen Anordnung des tragbaren Computers in der Erweiterungseinheit. Der erfindungsgemäße Aufbau der Erweiterungseinheit in der Ausführungsform der Modulbauweise kann auch erreicht werden, wenn der tragbare Computer in beliebiger anderer geometrischer Orientierung im Raum an die Erweiterungseinheit angeschlossen wird.

Die Erweiterungseinheit nach der vorliegenden Erfindung kann darüberhinaus zur Demontage, d.h. zur Zerlegung in ihre Einzelkomponenten vorgesehen sein, wobei insbesondere der Fuß als abnehmbar vorgesehen sein kann. Der demontierbare bzw. zerlegbare Aufbau der Erweiterungseinheit nach der vorliegenden Erfindung ist unabhängig von der vertikalen Anordnung des tragbaren Computers in der Erweiterungseinheit. Der erfindungsgemäße Aufbau der Erweiterungseinheit in der hier vorgestellten demontierbaren bzw. zerlegbaren Bauweise kann auch erreicht werden, wenn der tragbare Computer in beliebiger anderer geometrischer Orientierung im Raum an die Erweiterungseinheit angeschlossen wird.

Die Kontaktierung des tragbaren Computers mit der Erweiterungseinheit kann über einen austauschbaren Steckverbinder erfolgen, so daß diese Kontaktierung für verschiedene tragbare Computer verschiedener Hersteller möglich ist. Eine weitere Möglichkeit besteht darin, daß die Erweiterungseinheit eine austauschbare Steckverbinderplatte aufweist, die in ihrer jeweiligen Ausführungsform eine bestimmte Anordnung der jeweils verwendeten Steckverbinder vorsieht, so daß auch diese Kontaktierung für verschiedene tragbare Computer verschiedener Hersteller erfolgen kann. Die Kontaktierung mittels eines austauschbaren Steckverbinders oder einer austauschbaren Steckverbinderplatte nach der vorliegenden Erfindung ist unabhängig von der vertikalen Anordnung des tragbaren Computers in der Erweiterungseinheit. Der erfindungsgemäße Aufbau der Erweiterungseinheit in der hier vorgestellten, einen austauschbaren Steckverbinder oder eine austauschbare Steckverbinderplatte vorsehenden Ausführungsform kann auch erreicht werden, wenn der tragbare Computer in beliebiger anderer geometrischer Orientierung im Raum an die Erweiterungseinheit angeschlossen wird.

In der Erweiterungseinheit nach der vorliegenden Erfindung wird der tragbare Computer entweder von oben, mit seiner schmalen Rückwand in einen vertikalen Führungsbereich, welcher in einer senkrecht auf der Basiseinheit stehenden Einheit vorgesehen ist, verbracht z. B. nach unten gedrückt oder gezogen, um dann mit einer schmalen Seitenwand auf der Basiseinheit zur Auflage zu kommen oder aber mit der schmalen Seitenwand in einen horizontalen Führungsbereich, welcher in der Basiseinheit vorgesehen ist, eingeführt z. B. horizontal eingeschoben oder eingezogen, um dann mit der schmalen Rückwand an einer senkrecht auf der Basiseinheit stehenden Einheit zum Kontakt zu kommen. Der tragbare Computer ist dabei derart orientiert, daß seine schmale Rückseite entlang ihrer längeren Begrenzungslinie senkrecht zur Basiseinheit verläuft, d.h., daß der tragbare Computer hochkant, also vertikal, auf einer seiner schmalen Seitenwände steht. Somit kann das Andocken des tragbaren Computers, welcher z. B. ein Notebook oder Laptop ist, an die Erweiterungseinheit erfindungsgemäß sowohl von vorne in Richtung der Rückwand der Erweiterungseinheit, als auch von oben in Richtung der Basiseinheit geschehen. Es ist aber auch möglich, daß der tragbare Computer mit der schmalen Rückwand oder der schmalen Vorderseite unten auf der Basiseinheit aufliegt oder aber mit der schmalen Vorderseite an der senkrecht auf der Basiseinheit stehenden Einheit zum Kontakt kommt.

Die elektrische Kontaktierung des tragbaren Computers in der Erweiterungseinheit erfolgt vorzugsweise über einen Anzugsmechanismus. Der tragbare Computer wird in die Erweiterungseinheit eingelegt, fixiert sich in der Endposition, und wird hier über den Anzugsmechanismus kontaktiert und verriegelt.

Dabei kann für die Betätigung des Anzugsmechanismus sowohl eine Bedienung von Hand mittels eines Hebels, als auch ein elektrischer Antrieb vorgesehen sein. Eine Ausführungsform der vorliegenden Erfindung erlaubt die Kontaktierung des tragbaren Computers dadurch, daß der tragbare Computer den Anzugsmechanismus zur Kontaktierung durch sein Eigengewicht betätigt.

Desweiteren kann es nach der vorliegenden Erfindung vorgesehen sein, daß der Teil der Erweiterungseinheit, der unmittelbar mit dem tragbaren Computer kontaktiert ist, ein demontierbares Modul der Erweiterungseinheit darstellt und auch einzeln für sich genommen als sogenannter Portreplikator den Anschluß von peripheren Funktionseinheiten außerhalb des tragbaren Computers zu dessen Funktionserweiterung mittels Kabeln ermöglicht, ohne daß diese Funktionseinheiten als Module in der Erweiterungseinheit außerhalb des Portreplikators untergebracht sind. Ein Anschluß solcher externer Einheiten außerhalb der Erweiterungseinheit kann auch erfolgen, wenn der Portreplikator mit der Erweiterungseinheit verbunden ist. Dies geschieht dann ebenfalls vom Portreplikator direkt zu den externen Einheiten verlaufende Kabel. Alle anderen Elemente wie Zusatzmodule, Basiseinheit und Stützfuß verbleiben in dieser Ausführungform an ihrem Ort.

Die Erweiterungseinheit nach der vorliegenden Erfindung ist so ausgelegt, daß ihre Standsicherheit sowohl mit dem angeschlossenem tragbaren Computer und Verkabelung, als auch ohne diese gewährleistet ist. Darüberhinaus bietet der erfindungsgemaße Aufbau der Erweiterungseinheit einen Schutz vor auftretenden mechanische Belastungen durch evtl. vorhandene Kabel. Vorzugsweise weist die Erweiterungseinheit an ihrer Rückfront (hinten) verschiedene Anschlüsse, wie serielle und/oder parallele Anschlüsse, sowie Anschlüsse für VGA, game-ports, Anschlüsse für Netzwerke und den Anschluß an die Energieversorgung auf. Eine saubere Kabelführung und eine einfache Neuverkabelung ist durch den modularen Aufbau der Erweiterungseinheit gewährleistet. An der Frontseite (vorne) weist eine Ausführungsform der Erweiterungseinheit Soundbuchsen (Kopfhöhrer, Mikrophon) und Lautstärkeregler auf. Desweiteren ist in der Erweiterungseinheit vorzugsweise ein freier Steckplatz, z. B. für eine 2/3-lange sogenannte Erweiterungskarte, und z. B. eine Ladevorrichtung für einen zweiten Akku für den tragbaren Computer vorgesehen. Die Ladelektronik für diese Vorrichtung ist in der Erweiterungseinheit enthalten. Als Akkumulatoren können Nickel-Metallhydrid Li-Ionen Akkus verwendet werden. In einer Ausführungsform der Erfindung ist an der Erweiterungseinheit eine Statusanzeige für Akkuzustand, on/off, connect oder ähnliches mittels LCD oder LED angebracht. Das Netzteil der Erweiterungseinheit ist entweder als in die Erweiterungseinheit integriert, oder als externes Steckernetzteil vorgesehen. Hier kann in einer Ausführungsform der vorliegenden Erfindung das gleiche Steckernetzteil, wie es für den tragbaren Computer verwendet wird, benutzt werden. Die Erweiterungseinheit ist in einer Ausführungsform ohne Zusatzlüfter betreibbar.

Von großem Vorteil ist der geringe Grundflächenverbrauch der erfindungsgemäßen Erweiterungseinheit für tragbare Coputer, da der tragbare Computer nur mit einer seiner schmalen Seitenflächen auf der Erweiterungseinheit aufliegt und somit nur wenig Platz benötigt. Desweiteren erlaubt die modulare Erweiterbarkeit der Erweiterungseinheit eine optimale Anpassung an die Bedürfnisse des jeweiligen Anwenders, der somit keine für ihn überflüssigen Produktbestandteile erwerben muß. Ein weiterer Vorteil der hier vorliegenden Erfindung liegt in der guten Handhabbarkeit beim Einführen und Entnehmen des tragbaren Computers in bzw. aus der Erweiterungseinheit. Während bei den bisher bekannten Lösungen das nicht unerhebliche Eigengewicht, bedingt durch die schlechten Griffmöglichkeiten bei horizontaler Orientierung des tragbaren Computers, während des Einführens bzw. Herausnehmens sehr hinderlich war, ist dies bei der erfingsgemäßen Erweiterungseinheit durch die vertikale Orientierung des tragbaren Computers nicht mehr der Fall.

Durch die in einer Ausführungsform der Erfindung vorgesehene Verwendung eines austauschbaren Steckverbinders oder einer austauschbaren Steckverbinderplatte, auch Adapter genannt, wird desweiteren eine optimale Verträglichkeit (Kompatibilität) zu einer Vielzahl von tragbaren Computern, insbesondere auch Neuentwicklungen erreicht. Darüberhinaus weist die Erweiterungseinheit nach der vorliegenden Erfindung den Vorteil einer hohen Standfestigkeit, sowohl bei eingelegtem, wie auch bei nicht eingelegtem tragbaren Computer auf. In Folge der Modulbauweise ist ein guter Schutz vor mechanischen Belastungen durch die Verkabelung mit den peripheren Einheiten gegeben. Nicht zuletzt gewährleistet eine Ausführungsform, in der die erfindungsgemäße Erweiterungseinheit zerlegbar ist eine gute Transportabilität auf, speziell in der Ausführungsform mit abnehmbarem Fuß.

Ein weiterer ganz besonderer Vorteil liegt in einer Ausführungsform der Erfindung, die den Portreplikator vorsieht, wodurch auch periphere Einheiten außerhalb der Erweiterungseinheit nach der vorliegenden Erfindung genutzt werden können, so z.B. an anderen Orten, als am Aufstellungsort der Erweiterungseinheit. Der Portreplikator kann, leicht, da äußerst platzsparend, mitgenommen werden und der tragbare Computer somit allerorten an die jeweils vorhandene Peripherie mittels des Portreplikators angeschlossen werden.

Im folgenden werden Ausführungsbeispiele besprochen und anhand der beigefügten Zeichnung erläutert. In dieser zeigen:
- Fig. 1: eine perspektivische Darstellung einer Erweiterungseinheit mit Fuß, ohne tragbaren Computer und ohne aufsteckbare Module, von vorne gesehen,
- Fig. 2: eine perspektivische Darstellung eines 3,5" Moduls,
- Fig. 3: die Erweiterungseinheit gemäß Fig. 1 mit Fuß, ohne tragbaren Computer und ohne aufsteckbare Module von hinten gesehen in perspektivischer Rückenansicht,
- Fig. 4: in einer Darstellung entsprechend Fig. 1 die Erweiterungseinheit gemäß Fig. 1 mit Fuß, mit angedocktem tragbaren Computer und mit aufgesteckten Modulen,
- Fig. 5: die Erweiterungseinheit nach Fig. 1 mit Fuß, mit nicht angedocktem tragbaren Computer und mit nicht aufgesteckten Modulen von vorne gesehen in Form einer Explosionsdarstellung,
- Fig. 6: die Erweiterungseinheit nach Fig. 1 mit abgenommenem Fuß, ohne tragbaren Computer und ohne Module von vorne gesehen,
- Fig. 7: die Erweiterungseinheit nach Fig. 1 mit Fuß, ohne tragbaren Computer und ohne aufsteckbare Module von vorne gesehen, zur Erläuterung des Einschiebens des tragbaren Computers von vorne,
- Fig. 8: eine Erweiterungseinheit in perspektivischer Darstellung mit Fuß, ohne tragbaren Computer und ohne aufsteckbare Module von vorne gesehen, in einer Ausführungsform, die ein Einschieben des tragbaren Computers von oben ermöglicht,
- Fig. 9: perspektivische Darstellung eines tragbaren Computers mit angeschlossenem, aus der Erweiterungseinheit herausgenommenem Portreplikator,
- Fig. 10: eine perspektivische Darstellung einer Erweiterungseinheit mit Fuß, mit angedocktem tragbaren Computer und mit dem nicht aus der Erweiterungseinheit herausgenommenem, grundsätzlich aber herausnehmbaren Portreplikator, und
- Fig. 11: eine Erweiterungseinheit in perspektivischer Darstellung mit Fuß, ohne tragbaren Computer von vorne gesehen, in einer Ausführungsform mit der Steckverbindung zur elektrischen Kontaktierung in der Basiseinheit.

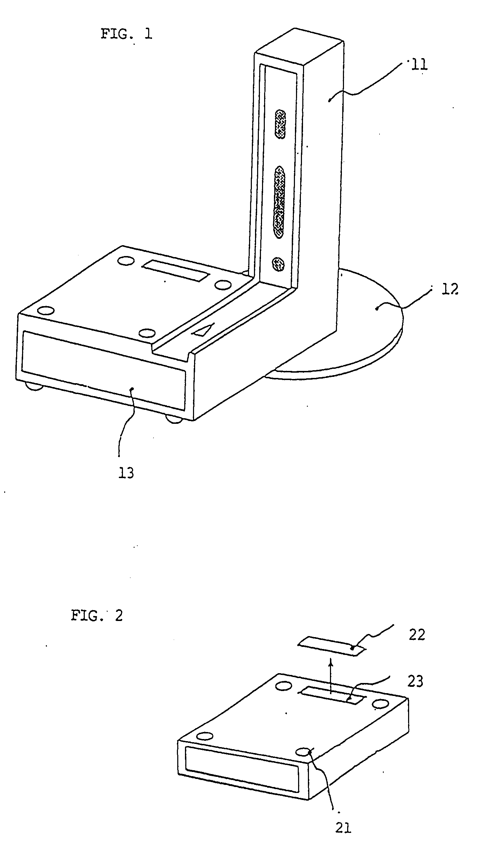

In Fig. 1 ist eine Ausführungsform der Erweiterungseinheit für tragbare Computer, auch Dockingstation genannt, zu sehen. Sie besteht aus einem Netzteil mit Ladestation **11**, Stützfuß **12** und einem 5,25" Modul-Einschub **13** entweder für CD-ROM oder 2/3-lange Erweiterungskarten.

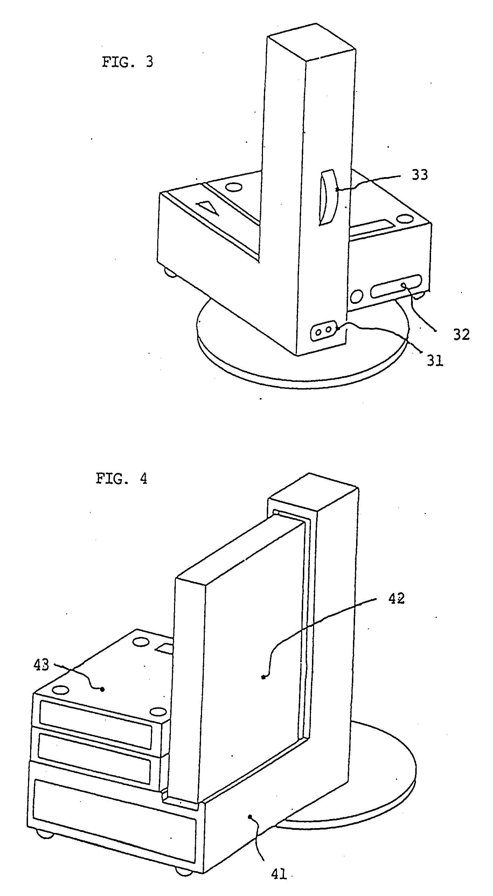

Das in Fig. 2 dargestellte 3,5" Modul kann auf die Erweiterungseinheit nach der vorliegenden Erfindung mittels einer Verbindungsvorrichtung, die im Ausführungsbeispiel Verbindungspunkte **21** nach dem Druckknopfprinzip hat, aufgesteckt werden. Es ist jedoch nicht nur eine Aufstecken auf die Erweiterungseinheit, sondern auch ein Aufstecken auf andere 3,5" Module nach dem gleichen Prinzip möglich, so daß die Module schichtweise übereinander angeordnet werden können. Dabei sind sie nicht nur über die Verbindungspunkte **21** mechanisch, sondern auch mittels eines Bussystems **23** elektrisch miteinander und mit der Erweiterungseinheit verbunden. Um die elektrische Verbindung vermittels des Bussystem **21** der Module untereinander auch mechanisch herstellen zu können, kann jeweils oberhalb des Bussystems **21** ein Deckel **22** zur Öffnung des Modulgehäuses entfernt werden. Bei dem jeweils oberen Modul einer schichtweisen Anordnung mehrerer Module bleibt die Gehäuseöffnung verschlossen, der Deckel verbleibt also im Gehäuse.

In Fig. 3 sind die rückwärtig an einer Ausführungsform der Erweiterungseinheit nach dieser Erfindung befindlichen Elemente zu sehen. Hier befindet sich ein Hebel **33**, welcher den Anzugsmechanismus für die Kontaktierung und Verriegelung des tragbaren Computers betätigt. Desweiteren sind hier Anschlußbuchsen **32** und die Buchse für die Stromversorgung **31** für die Erweiterungseinheit untergebracht.

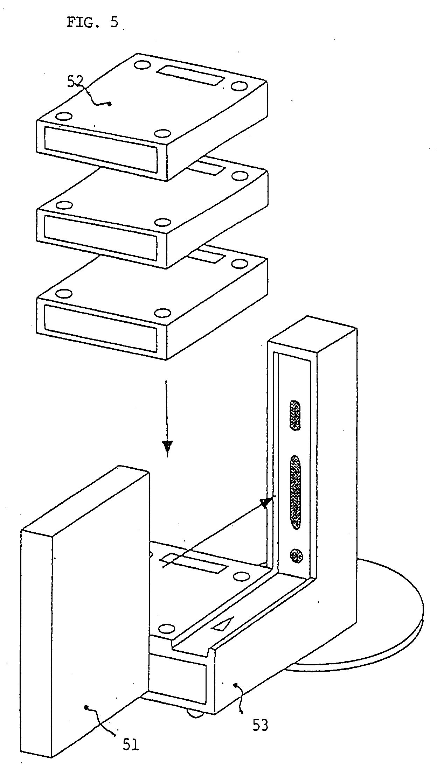

In Fig. 4 ist eine Ausführungsform der hier vorliegenden Erfindung zusehen, wobei der tragbare Computer **42** und 3,5" Module **43** hier mit der Erweiterungseinheit **41** verbunden sind.

Fig. 5 zeigt eine Explosionsdarstellung einer Ausführungsform der vorliegenden Erfindung in der 3,5" Module **52** von oben und der tragbare Computer **51** vertikal stehend von vorne an die Erweiterungseinheit **53** angeschlossen werden.

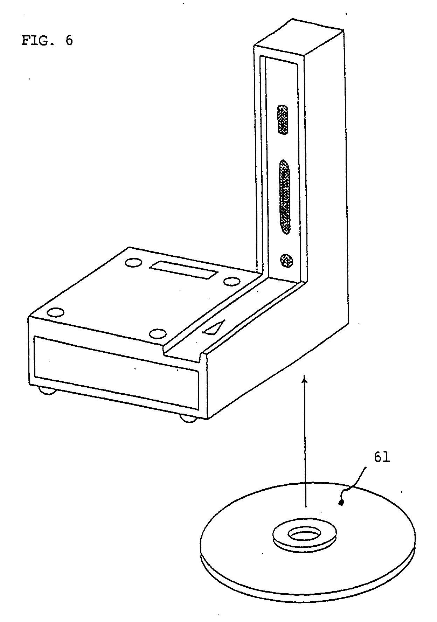

Fig. 6 zeigt eine Ausführungsform der vorliegenden Erfindung, in der der Fuß **61** von der Erweiterungseinheit abnehmbar ist.

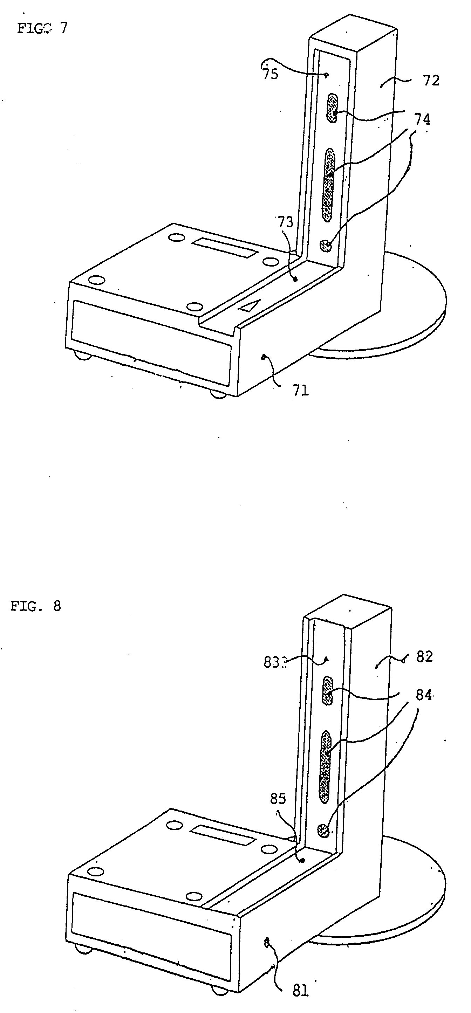

Fig. 7 stellt eine Ausführungsform der Erfindung dar, die zum Einschieben des tragbaren Computers in die Erweiterungseinheit von vorne vorgesehen ist. Die Erweiterungseinmheit nach dieser Ausführungsform der vorliegenden Erfindung besteht aus mindestens zwei Teilen, nämlich einer horizontal angeordneten Basiseinheit **71** und einer senkrecht zu der Basiseinheit angeordneten Einheit (rechteckige Säule) **72**. Zum Zwecke des Einschubs ist in der Erweiterungseinheit ein zur Vorderseite hin sich öffnender Führungsbereich **73** vorgesehen, der das Einschieben mit einer der schmalen Seitenflächen des tragbaren Computers ermöglicht. Eine Ausführungsform der vorliegenden Erfindung weist in dem Führungsbereich Mittel auf, die es ermöglichen, die Breite des Führungsbereichs der Breite des jeweils verwendeten tragbaren Computers anzupassen, so daß hier verschiedene tragbare Computer verschiedener Hersteller verwendet werden können. Die Fixierung und elektrische Kontaktierung mit der schmalen Rückseite des tragbaren Computers geschieht an einer senkrechten, rechteckigen Säule **72**, die ein U-Profil **75** aufweist, wie der Führungsbereich **73**. Eine Ausführungsform der vorliegenden Erfindung weist in dem U-Profil **75** Mittel auf, die es ermöglichen, die Breite des Profils der Breite des jeweils verwendeten tragbaren Computers anzupassen. Bei einer Ausführungsform ist die Steckverbindung zur elektrischen Kontaktierung **74** dadurch variabel gehalten, daß die Rückplatte des Führungsbereiches **75** mit der Steckverbindung zur elektrischen Kontaktierung **74** als sogenannte Steckverbinderplatte leicht austauschbar ist. Die Steckverbinderplatte weist in ihrer jeweiligen Ausführungsform dann eine bestimmte Anordnung der Stecker auf, so daß hierdurch eine hohe Kompatibilität zu möglichst vielen verschiedenen tragbaren Computern verschiedener Hersteller erreicht wird. Bei einer weiteren Ausführungsform ist die Steckverbindung zur elektrischen Kontaktierung **74** dadurch variabel gehalten, daß sie in einer Achse, nämlich der Senkrechten, verschiebbar ausgeführt ist. Auch hierdurch wird eine hohe Kompatibilität zu möglichst vielen verschiedenen tragbaren Computern verschiedener Hersteller erreicht.

Fig. 8 stellt eine Ausführungsform der Erfindung dar, die zum Einschieben des tragbaren Computers in die Erweiterungseinheit von oben vorgesehen ist. Die Erweiterungeinheit nach dieser Ausführungsform der vorliegenden Erfindung besteht aus mindestens zwei Teilen, nämlich einer horizontal angeordneten Basiseinheit **81** und einer senkrecht zu der Basiseinheit angeordneten Einheit (rechteckige Säule) **82**. Zum Zwecke des Einschubs ist in der Erweiterungseinheit ein nach oben hin sich öffnender Führungsbereich **83** in einer senkrechten rechteckigen Säule **82** vorgesehen, der das Einschieben mit der schmalen Rückseitenfläche des tragbaren Computers ermöglicht. Eine Ausführungsform der vorliegenden Erfindung weist in dem Führungsbereich Mittel auf, die es ermöglichen die Breite des Führungsbereichs der Breite des jeweils verwendeten tragbaren Computers anzupassen, so daß hier verschiedene tragbare Computer verschiedener Hersteller verwendet werden können. Die Fixierung mit einer der beiden schmalen Seitenflächen des tragbaren Computers geschieht in der Erweiterungseinheit mittels eines U-Profils **85**, wie im Führungsbereich **83**. Eine Ausführungsform der vorliegenden Erfindung weist in dem U-Profil **85** Mittel auf, die es ermöglichen die Breite des Profils der Breite des jeweils verwendeten tragbaren Computers anzupassen. Die elektrische Kontaktierung mit der schmalen Rückseite des tragbaren Computers geschieht an einer senkrechten, rechteckigen Säule **82** und zwar innerhalb des Führungsbereiches **83**. Bei einer Ausführungsform ist die Steckverbindung zur elektrischen Kontaktierung **84** dadurch variabel gehalten, daß die Rückplatte des Führungsbereiches **85** mit der Steckverbindung zur elektrischen Kontaktierung **84** als sogenannte Steckverbinderplatte leicht austauschbar ist. Die Steckverbinderplatte weist in ihrer jeweiligen Ausführungsform dann eine bestimmte Anordnung der Stecker auf, so daß hierdurch eine hohe Kompatibilität zu möglichst vielen verschiedenen tragbaren Computern verschiedener Hersteller erreicht wird. Bei einer weiteren Ausführungsform ist die Steckverbindung zur elektrischen Kontaktierung **84** dadurch variabel gehalten, daß sie in einer Achse, nämlich der Senkrechten, verschiebbar ausgeführt ist. Auch hierdurch wird eine hohe Kompatibilität zu möglichst vielen verschiedenen tragbaren Computern verschiedener Hersteller erreicht.

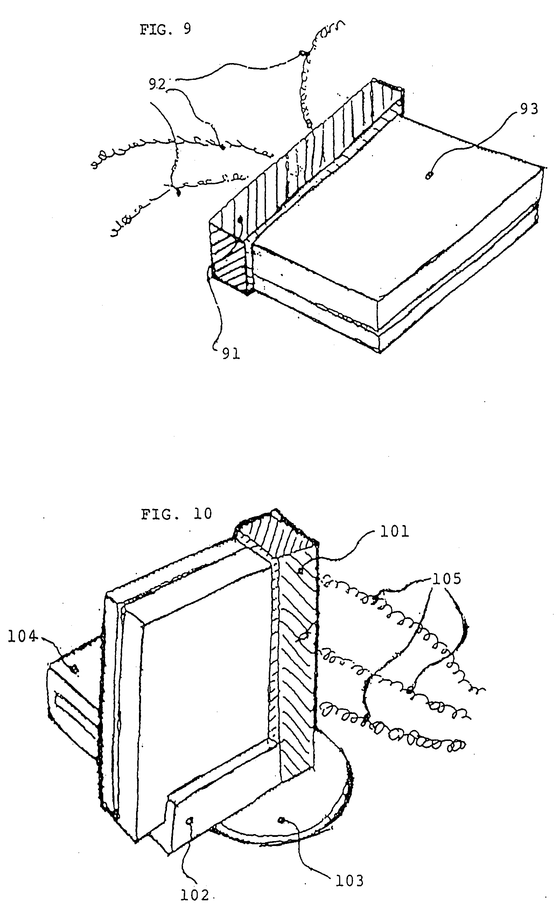

Fig. 9 zeigt einen tragbaren Computer **93**, der an einen sogenannten Portreplikator **91** durch Aufstecken angeschlossen ist. Der Portreplikator **93**, der als solcher, für sich alleine betrachtet, schon vorbekannt ist, ermöglicht den Anschluß von peripheren Funktionseinheiten außerhalb des tragbaren Computers zu dessen Funktionserweiterung mittels Kabeln **92**, ohne daß diese Funktionseinheiten als Module in der Erweiterungseinheit untergebracht sind. Der Portreplikator **91** ist dabei einer Ausführungsform der Erweiterungseinheit nach der vorliegenden Erfindung entnommen, wobei er in der Erweiterungseinheit als senkrechte, rechteckige Säule zur Fixierung oder Führung und der elektrischen Kontaktierung des tragbaren Computers dient. Er ist als solche ohne zusätzliche Mittel, also ohne Werkzeuge lösbar.

In Fig. 10 ist zu sehen, wie der abnehmbare Portreplikator **101** in der Erweiterungseinheit **102** oberhalb des Standfußes **103** untergebracht ist und er dort neben den unmittelbar über die Erweiterungseinheit angeschlossenen Modulen **104** auch den Anschluß weiterer externer peripherer Einheiten mittels Kabeln **105** ermöglicht. Die austauschbare Steckverbindung bzw. austauschbare Steckverbinderplatte kann auch zum Anschluß des tragbaren Computers an den Portreplikator genutzt werden.

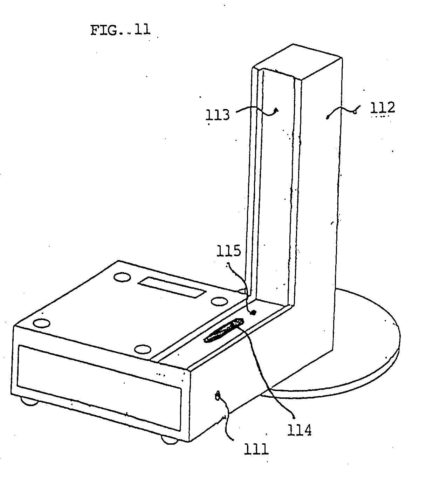

Fig. 11 stellt eine Ausführungsform der Erweiterungeinheit nach der vorliegenden Erfindung dar, die aus aus mindestens zwei Teilen besteht, nämlich einer horizontal angeordneten Basiseinheit **111** und einer senkrecht zu der Basiseinheit angeordneten Einheit (rechteckige Säule) **112**. In dieser Ausführungsform der Erfindung ist die Steckverbindung zur Kontaktierung des tragbaren Computers in der Basiseinheit **111** angeordnet. Zum Zwecke des Einschubs ist in der Erweiterungseinheit ein nach oben hin sich öffnender Führungsbereich **113** in der senkrechten rechteckigen Säule **112** vorgesehen, der das Einschieben mit der schmalen Rückseitenfläche des tragbaren Computers ermöglicht. Eine Ausführungsform der vorliegenden Erfindung erlaubt die Kontaktierung des tragbaren Computers dadurch, daß der tragbare Computer den Anzugsmechanismus zur Kontaktierung durch sein Eigengewicht betätigt. Bei einer Ausführungsform ist die Steckverbindung zur elektrischen Kontaktierung **114** dadurch variabel gehalten, daß die untere Platte des Führungsbereiches **115** mit der Steckverbindung zur elektrischen Kontaktierung **114** als sogenannte Steckverbinderplatte leicht austauschbar ist. Die Steckverbinderplatte weist in ihrer jeweiligen Ausführungsform dann eine bestimmte Anordnung der Stecker auf, so daß hierdurch eine hohe Kompatibilität zu möglichst vielen verschiedenen tragbaren Computern verschiedener Hersteller erreicht wird. Bei einer weiteren Ausführungsform ist die Steckverbindung zur elektrischen Kontaktierung **114** dadurch variabel gehalten, daß sie in Längsrichtung der Führung, verschiebbar ausgeführt ist. Auch hierdurch wird eine hohe Kompatibilität zu möglichst vielen verschiedenen tragbaren Computern verschiedener Hersteller erreicht.

## Patentansprüche

1. Erweiterungseinheit (**53**) für tragbare Computer (**51**), mit einem Trägergehäuse, das Mittel für die Kontaktierung und Lagerung des tragbaren Computers hat und mit einer Elektronikplatine, die Anschlüsse für periphere Funktionseinheiten außerhalb des tragbaren Computers zu dessen Funktionserweiterung aufweist, dadurch gekennzeichnet, daß die Lagerung und Kontaktierung des tragbaren Computers in der Erweiterungseinheit vertikal gekippt, d.h. mit der schmalen Rückseite des tragbaren Computers senkrecht zur Horizontalen, erfolgt.

2. Erweiterungseinheit nach Anspruch 1, dadurch gekennzeichnet, daß der tragbare Computer (**51**) mit einer seiner zwei schmalen Seitenflächen, vertikal stehend, auf der Erweiterungseinheit aufliegt.

3. Erweiterungseinheit nach Anspruch 1 oder 2, dadurch gekennzeichnet, daß sie eine Vorrichtung zur Aufnahme der peripheren Funktionseinheiten in Modulbauweise (**52**) außerhalb des tragbaren Computers zu dessen Funktionserweiterung aufweist.

4. Erweiterungseinheit nach Anspruch 1, 2 oder 3, dadurch gekennzeichnet, daß sie aus einer Mehrzahl von Einzelteilen besteht und in diese leicht lösbar miteinander verbunden sind.

5. Erweiterungseinheit nach Anspruch 1, 2, 3 oder 4, dadurch gekennzeichnet, daß sich ein Fuß (**61**) an der Erweiterungseinheit befindet und dieser Fuß (**61**) von der Erweiterungseinheit abnehmbar ist.

6. Erweiterungseinheit nach Anspruch 1, 2, 3, 4 oder 5, dadurch gekennzeichnet, daß die Kontaktierung des tragbaren Computers mit der Erweiterungseinheit über einen austauschbaren Steckverbinder erfolgt oder, daß die Erweiterungseinheit eine austauschbare Steckverbinderplatte aufweist, die in ihrer jeweiliegen Ausführungsform eine bestimmte Anordnung der jeweils verwendeten Steckverbinder vorsieht, so daß diese Kontaktierung für verschiedene tragbare Computer verschiedener Hersteller erfolgen kann.

7. Erweiterungseinheit nach Anspruch 1, 2, 3, 4, 5 oder 6, dadurch gekennzeichnet, daß als Bestandteile der Erweiterungseinheit mindestens zwei Teile, nämlich eine horizontal angeordnete Basiseinheit (**71**, **81**) mit Führungsbereich (**73**, **83**) und eine senkrecht zu der Basiseinheit angeordnete Einheit (**72**, **82**) vorgesehen sind, wodurch das Einschieben des tragbaren Computers in die Erweiterungseinheit zum Zwecke der Lagerung und Kontaktierung von vorne, d.h. in Richtung der Rückseite der Erweiterungseinheit erfolgen kann, und/oder von oben, d.h. in Richtung der Basiseinheit der Erweiterungseinheit erfolgen kann.

8. Erweiterungseinheit nach Anspruch 7, dadurch gekennzeichnet, daß eine Vorrichtung zur Kontaktierung und Verriegelung des tragbaren Computers in der Erweiterungseinheit nach dem Einlegen in die Erweiterungseinheit und der Fixierung dort in der Endposition mittels eines Anzugsmechanismus vorgesehen ist.

9. Erweiterungseinheit nach Anspruch 8, dadurch gekennzeichnet, daß der Anzugsmechanismus von Hand über einen Hebel (**33**) oder automatisch mittels eines Motors oder durch das Eigengewicht des tragbaren Computers betätigbar ist.

10. Erweiterungseinheit nach Anspruch 7, 8 oder 9, dadurch gekennzeichnet, daß der Teil der Erweiterungseinheit, der unmittelbar mit dem tragbaren Computer kontaktiert ist, ein demontierbares Modul der Erweiterungseinheit darstellt und auch einzeln für sich genommen als sogenannter Portreplikator (**91**, **101**) den Anschluß von peripheren Funktionseinheiten außerhalb des tragbaren Computers zu dessen Funktionserweiterung ermöglicht, ohne daß diese Funktionseinheiten als Module in der Erweiterungseinheit außerhalb des Portreplikators untergebracht sind.
